# FASCICULE DE BREVET EUROPEEN

(11) **EP 0 924 400 B1**
(45) Date de publication et mention de la délivrance du brevet: **13.02.2002**
(21) Numéro de dépôt: 98403126.0
(22) Date de dépôt: 11.12.1998
(51) Int. Cl.: F01N 3/20, F01N 3/08, F02D 41/02

(54) **Dispositif d'échappement pour moteur à combustion interne à faible taux d'émission d'oxydes d'azote et procédé de réduction des oxydes d'azote émis dans les gaz d'échappement**
Abgasvorrichtung für eine Brennkraftmaschine mit niedriger NOx-Emission und Verfahren zum Reduzieren von NOx, das durch das Abgas ausgestossen wird
Exhaust apparatus for low NOx emission internal combustion engines and process for reducing NOx emitted in the exhaust gas

(30) Priorité: 17.12.1997 FR 9715993
(43) Date de publication de la demande: 23.06.1999
(73) Titulaire: RENAULT, 92109 Boulogne-Billancourt (FR); AUTOMOBILES PEUGEOT, 75016 Paris (FR); AUTOMOBILES CITROEN, 92200 Neuilly-sur-Seine (FR)
(72) Inventeur: Davias, Nathalie, 78320 La Verriere (FR); Noirot, Rémi Résidence Bellerue Appt. 47, 92800 Puteaux (FR)
(74) Mandataire: Fernandez, Francis

(56) Documents cités:
- EP-A- 0 802 315
- WO-A-96/03572
- WO-A-97/19261
- FR-A- 2 749 351
- GB-A- 2 303 565
- PATENT ABSTRACTS OF JAPAN vol. 097, no. 005, 30 mai 1997 & JP 09 004441 A (MITSUBISHI MOTORS CORP), 7 janvier 1997

## Description

D'une manière générale, la présente invention concerne un dispositif d'échappement pour moteur à combustion interne, en particulier un moteur à mélange pauvre (diesel ou essence), réduisant le taux des oxydes d'azote présents dans les gaz d'échappement et relâchés dans l'atmosphère ainsi qu'un procédé de réduction du taux des oxydes d'azote dans les gaz d'échappement émis dans l'atmosphère.

Les normes actuelles et futures concernant la pollution des moteurs à combustion interne et en particulier des moteurs à mélange pauvre, imposent et imposeront une réduction de plus en plus importante des émissions d'oxyde d'azote.

La réduction chimique des oxydes d'azote en azote en milieu oxydant au moyen d'un catalyseur généralement appelé catalyseur DeNOx, ou au moyen d'un piège à NOx, nécessite actuellement une forte teneur en réducteurs hydrocarbures ou CO. Bien que le mécanisme réactionnel des catalyseurs DeNOx ne soit pas encore très bien connu, les travaux les plus récents montrent que la première étape du schéma réactionnel comprend l'oxydation de l'oxyde NO en NO₂ en milieu oxydant.

La seconde étape du schéma réactionnel des catalyseurs DeNOx serait l'action de NO₂ sur les hydrocarbures pour donner un intermédiaire réactionnel quel que soit le type de catalyseur utilisé.

Le bilan des études montre que la présence d'oxyde d'azote sous forme oxydée NO₂ est favorable à la réduction en azote N₂. Par conséquent, il est souhaitable d'oxyder NO en NO₂ au moyen d'un catalyseur d'oxydation classique avant l'action du catalyseur DeNOx, mais sans oxyder des hydrocarbures ajoutés volontairement puisque ceux-ci sont nécessaires dans la phase de réduction du catalyseur DeNOx principal.

Malheureusement, aucun catalyseur à ce jour n'est connu pour oxyder sélectivement NO par rapport aux hydrocarbures. Pour le piège à NOx, un catalyseur d'oxydation est nécessaire pour la phase d'amorçage, mais ensuite il est néfaste lors des incursions à richesse ≥ 1 pour régénérer le piège et traiter les NOx. Pour satisfaire ces exigences, on a déjà envisagé d'injecter les hydrocarbures au moyen d'un système d'injection annexe entre un bloc catalytique d'oxydation classique et un bloc catalytique DeNOx.

Un tel système annexe d'injection est difficile à mettre en oeuvre car il nécessite un asservissement en fonction des émission des oxydes d'azote NOx, et peu fiable du fait de l'encrassement de l'injecteur et de son temps de réponse, et, en outre, engendre un surcoût du système non négligeable.

Pour éviter l'utilisation d'un système annexe complexe d'injection d'hydrocarbures dans le système d'échappement, on pourrait envisager d'effectuer une post-injection d'hydrocarbures en phase d'échappement du moteur. Mais, dans ce cas, la présence d'un bloc catalytique d'oxydation en aval du point de post-injection d'hydrocarbures et en amont du bloc catalytique principal va immanquablement jouer son rôle et oxyder également les hydrocarbures

Le demande FR 2749351 décrit un dispositif de conversion des oxydes d'azote dans le gaz d'échappement d'un moteur à combustion interne au moyen d'un système catalytique pouvant comprendre deux blocs catalytiques distincts disposés dans le conduit d'échappement.

La présente invention a donc pour objet un système d'échappement remédiant aux inconvénients précédents.

Plus particulièrement, la présente invention a pour objet un système d'échappement dans lequel des hydrocarbures sont injectés en amont d'un bloc catalytique classique d'oxydation et qui permet d'acheminer ces hydrocarbures post-injectés en aval de ce bloc catalytique d'oxydation et en amont d'un bloc catalytique principal, DeNOx ou piège à NOx.

L'invention a également pour objet un procédé pour réduire le taux des oxydes d'azote contenus dans les gaz d'échappement d'un moteur à combustion interne relâchés dans l'atmosphère, permettant une réduction optimale des oxydes d'azote.

On atteint les objectifs ci-dessus selon l'invention au moyen d'un dispositif d'échappement de moteur à combustion interne comprenant un système catalytique pour l'élimination des gaz d'échappement formé d'un premier bloc catalytique d'oxydation de l'oxyde d'azote NO en NO₂ en amont d'un second bloc catalytique de réduction des oxydes d'azote avec ou sans adsorption préalable des NOx, caractérisé en ce qu'il comprend un moyen de post-injection d'hydrocarbures en amont du système catalytique et un moyen pour acheminer directement les hydrocarbures post-injectés et une partie des gaz d'échappement en aval du premier bloc catalytique d'oxydation et en amont du second bloc catalytique de réduction des oxydes d'azote.

La post-injection des hydrocarbures s'effectue de préférence directement dans un cylindre ou en aval d'un cylindre du moteur, de telle sorte que le moyen d'acheminement des hydrocarbures post-injectés collecte les hydrocarbures post-injectés et les gaz d'échappement dudit cylindre indépendamment des gaz d'échappement des autres cylindres.

La post-injection des hydrocarbures peut être réalisée au moyen d'un injecteur supplémentaire ou, par exemple dans le cas de moteurs à injection Directe essence ou Diesel, au moyen de la rampe d'injection qui peut être réglée pour assurer une injection indépendante pour chacun des cylindres du moteur. Ainsi, on peut réaliser la post-injection d'hydrocarbures uniquement dans un seul cylindre ou directement en aval d'un seul cylindre.

Le moyen d'acheminement des hydrocarbures post-injectés est tel qu'il achemine ces hydrocarbures post-injectés en aval du premier bloc catalytique d'oxydation, mais en amont du second bloc catalytique de réduction des oxydes d'azote constitué par le catalyseur DeNOx ou le piège à NOx.

Dans la réalisation préférée où les hydrocarbures post-injectés sont post-injectés dans un seul cylindre ou en aval d'un seul cylindre, les hydrocarbures post-injectés et les gaz d'échappement de ce seul cylindre sont ainsi acheminés directement en amont du catalyseur principal pour la réduction des oxydes d'azote. Toutefois, le reste des gaz d'échappement (environ 3/4 du débit total) passe à travers le bloc catalytique d'oxydation et par conséquent 3/4 de l'oxyde NO se trouvent oxydés en NO₂ en amont du catalyseur DeNOx ou piège à NOx.

L'invention concerne également un procédé pour réduire le taux des oxydes d'azote contenus dans les gaz d'échappement d'un moteur à combustion interne destinés à être relâchés dans l'atmosphère, ledit moteur comprenant un dispositif d'échappement comportant un système catalytique formé d'un premier bloc catalytique d'oxydation de l'oxyde d'azote NO en NO₂ en amont d'un second bloc catalytique de réduction des oxydes d'azote, qui comprend :
- une post-injection d'hydrocarbures pendant la phase d'échappement du moteur, en un endroit situé en amont du premier bloc catalytique d'oxydation; et
- l'acheminement des hydrocarbures post-injectés directement depuis l'endroit de la post-injection jusqu'à un endroit dans le dispositif d'échappement situé en aval du premier bloc catalytique d'oxydation et en amont du second bloc catalytique de réduction des oxyes d'azote.

De préférence, dans le procédé, la post-injection d'hydrocarbures s'effectue directement dans un seul cylindre et l'acheminement des hydrocarbures post-injectés s'effectue directement depuis ce cylindre.

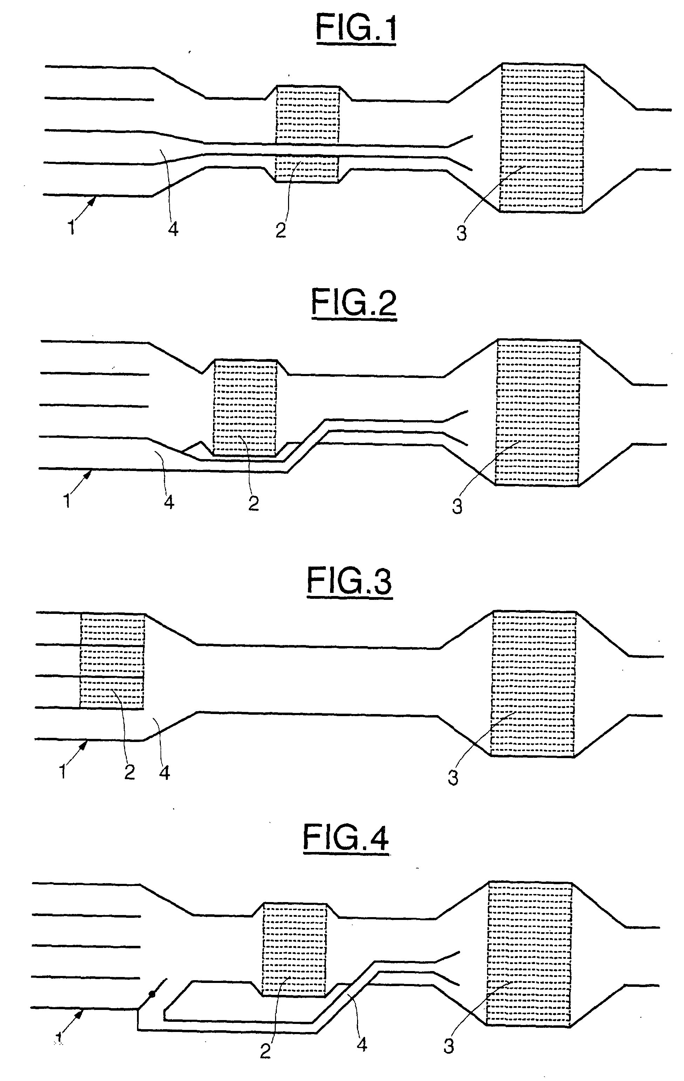

La suite de la description se réfère aux figures 1 à 4 annexées qui représentent différents modes de réalisations possibles d'un dispositif d'échappement selon l'invention.

Sur les figures, on a représenté un dispositif d'échappement selon l'invention, qui comprend un collecteur 1 des gaz d'échappement d'un moteur à combustion interne, par exemple un moteur à mélange pauvre essence ou diesel. Dans ce collecteur est disposé un système catalytique de réduction des polluants des gaz d'échappement, comprenant un premier bloc catalytique d'oxydation 2 disposé en amont d'un second bloc catalytique de réduction des oxydes d'azote 3. Un dispositif (non représenté), tel qu'un injecteur ou une rampe d'injection dans le cas d'un moteur à injection Directe essence ou Diesel, est également prévu pour la post-injection d'hydrocarbures lors de la phase d'échappement du moteur. De préférence, le dispositif de post-injection d'hydrocarbures est commandé pour injecter des hydrocarbures lors de la phase d'échappement uniquement dans un seul cylindre du moteur.

Comme le montrent les figures, un dispositif d'acheminement des hydrocarbures post-injectés 4 est prévu dans le dispositif d'échappement,
- soit (figure 1) sous la forme d'une simple tubulure, reliée à l'échappement du cylindre dans lequel les hydrocarbures sont post-injectés et qui achemine en traversant le bloc catalytique d'oxydation les hydrocarbures et les gaz d'échappement du cylindre en aval du bloc catalytique d'oxydation et en amont du bloc catalytique de réduction des oxydes d'azote 3,
- soit (figures 2 et 4) avec un by-pass du bloc catalytique d'oxydation des hydrocarbures 2, à l'aide d'une simple tubulure reliée à l'échappement du cylindre dans lequel sont post-injectés les hydrocarbures,
- soit (figure 3) avec un dispositif où le catalyseur d'oxydation est placé en sortie du collecteur d'échappement 1 sur uniquement trois cylindres, laissant libre l'échappement du cylindre dans lequel sont post-injectés les hydrocarbures.

## Revendications

1. Système d'échappement de moteur à combustion interne comprenant un système catalytique pour l'élimination des polluants des gaz d'échappement du moteur formé d'un premier bloc catalytique en amont d'un second bloc catalytique, un moyen de post-injection d'hydrocarbures lors de la phase d'échappement du moteur en amont du système catalytique, et un moyen (4) pour acheminer directement les hydrocarbures post-injectés en aval du premier bloc catalytique et en amont du second bloc catalytique **caractérisé par le fait que** le premier bloc catalytique (2) est un bloc catalytique d'oxydation de l'oxyde d'azote NO en NO₂ tandis que le deuxième bloc catalytique (3) est un bloc catalytique de réduction des oxydes d'azotes.

2. Système d'échappement selon la revendication 1, **caractérisé en ce que** le moyen de post-injection d'hydrocarbures effectue la post-injection dans un des cylindres du moteur ou directement en aval d'un cylindre du moteur.

3. Système d'échappement selon la revendication 2, **caractérisé en ce que** le moyen d'acheminement achemine uniquement les gaz d'échappement et les hydrocarbures injectés dudit cylindre.

4. Système d'échappement selon l'une quelconque des revendications 1 à 3, **caractérisé en ce que** le moyen de post-injection d'hydrocarbures est un injecteur mécanique.

5. Système d'échappement selon l'une quelconque des revendications 1 à 3, **caractérisé en ce que** le moyen de post-injection d'hydrocarbures est une rampe d'injection.

6. Système d'échappement selon l'une quelconque des revendications 1 à 5, **caractérisé en ce que** le moteur est un moteur à mélange pauvre diesel ou essence.

7. Système d'échappement selon l'une quelconque des revendications 1 à 5, **caractérisé en ce que** le moteur est à injection Directe.

8. Procédé pour diminuer le taux des oxydes d'azote contenus dans les gaz d'échappement d'un moteur à combustion interne par catalyse en présence d'hydrocarbures post-injectés pendant la phase d'échappement, **caractérisé par le fait qu'**on procède tout d'abord à une oxydation de l'oxyde d'azote NO en NO₂ dans un premier bloc catalytique d'oxydation sans adjonction d'hydrocarbures post-injectés et qu'on procède ensuite à une réduction des oxydes d'azote avec ou sans piégeage des NO₂, dans un deuxième bloc catalytique de réduction en présence d'hydrocarbures post-injectés.

9. Procédé selon la revendication 8, **caractérisé en ce que** la post-injection d'hydrocarbures s'effectue directement dans un cylindre.

10. Procédé selon la revendication 9, **caractérisé en ce que** l'étape d'acheminement des hydrocarbures post-injectés comprend uniquement l'acheminement des hydrocarbures post-injectés et des gaz d'échappement dudit cylindre.

## Claims

1. Exhaust system for an internal combustion engine comprising a catalytic system for elimination of pollutants of the engine exhaust gases formed by a first catalytic module upstream of a second catalytic module, a means for post-injection of hydrocarbons during the engine exhaust phase upstream of the catalytic system, and a means (4) for directly routing the post injected hydrocarbons downstream of the first catalytic module and upstream of the second catalytic module, **characterised by** the fact that the first catalytic module (2) is a catalytic module for oxidation of the oxide of nitrogen NO to form NO₂, whereas the second catalytic module (3) is a catalytic module for reducing oxides of nitrogen.

2. Exhaust system according to claim 1, **characterised in that** the means for post-injection of hydrocarbons carries out the post-injection into one of the engine cylinders or directly downstream of an engine cylinder.

3. Exhaust system according to claim 2, **characterised in that** the routing means only routes the exhaust gases and the injected hydrocarbons of said cylinder.

4. Exhaust system according to any one of claims 1 to 3, **characterised in that** the means for post-injection of hydrocarbons is a mechanical injector.

5. Exhaust system according to any one of claims 1 to 3, **characterised in that** the means for post-injection of hydrocarbons is an injection distributor.

6. Exhaust system according to any one of claims 1 to 5, **characterised in that** the engine is a lean-mix diesel or petrol engine.

7. Exhaust system according to any one of claims 1 to 5, **characterised in that** the engine is a direct injection engine.

8. Method for reducing the amount of oxides of nitrogen contained in the exhaust gases of an internal combustion engine by catalysis in the presence of hydrocarbons post-injected during the exhaust phase, **characterised by** the fact that firstly oxidation of the oxide of nitrogen NO to NO₂ is undertaken in a first catalytic oxidation module without the addition of post-injected hydrocarbons, and then reduction of the oxides of nitrogen is undertaken with or without trapping of NO₂s in a second catalytic reduction module in the presence of post-injected hydrocarbons.

9. Method according to claim 8, **characterised in that** the post-injection of hydrocarbons takes place directly into a cylinder.

10. Method according to claim 9, **characterised in that** the step of routing the post-injected hydrocarbons comprises only the routing of the post-injected hydrocarbons and the exhaust gases of said cylinder.

## Patentansprüche

1. Auspuffanlage für einen Verbrennungsmotor mit einem Katalysatorsystem zur Eliminierung der Schadstoffe in den Auspuffgasen des Motors, gebildet aus einem ersten Katalysatorblock stromaufwärts von einem zweiten Katalysatorblock, einem Mittel zur nachträglichen Einspritzung von Kohlenwasserstoffen während der Ausstoßphase des Motors stromaufwärts vom Katalysatorsystem und einem Mittel (4) zur direkten Beförderung der nachträglich eingespritzten Kohlenwasserstoffe an einen Ort stromabwärts vom ersten Katalysatorblock und stromaufwärts vom zweiten Katalysatorblock, **dadurch gekennzeichnet, dass** der erste Katalysatorblock (2) ein Katalysatorblock zur Oxidation des Stickoxids NO zu NO₂ ist, während der zweite Katalysatorblock (3) ein Katalysatorblock zur Reduktion der Stickoxide ist.

2. Auspuffanlage nach Anspruch 1, **dadurch gekennzeichnet, dass** das Mittel zur nachträglichen Einspritzung von Kohlenwasserstoffen die nachträgliche Einspritzung in einen der Zylinder des Motors oder direkt stromabwärts von einem Zylinder des Motors durchführt.

3. Auspuffanlage nach Anspruch 2, **dadurch gekennzeichnet, dass** das Mittel zur Beförderung nur die Auspuffgase des genannten Zylinders und die in diesen eingespritzten Kohlenwasserstoffe befördert.

4. Auspuffanlage nach einem der Ansprüche 1 bis 3, **dadurch gekennzeichnet, dass** das Mittel zur nachträglichen Einspritzung von Kohlenwasserstoffen eine mechanische Einspritzdüse ist.

5. Auspuffanlage nach einem der Ansprüche 1 bis 3, **dadurch gekennzeichnet, dass** das Mittel zur nachträglichen Einspritzung von Kohlenwasserstoffen eine Verteilerrampe ist.

6. Auspuffanlage nach einem der Ansprüche 1 bis 5, **dadurch gekennzeichnet, dass** der Motor ein Motor mit magerem Diesel- oder Benzingemisch ist.

7. Auspuffanlage nach einem der Ansprüche 1 bis 5, **dadurch gekennzeichnet, dass** der Motor ein Direkteinspritzmotor ist.

8. Verfahren zur Senkung des Anteils der in den Auspuffgasen eines Verbrennungsmotors enthaltenen Stickoxide durch Katalyse in Gegenwart von während der Ausstoßphase nachträglich eingespritzten Kohlenwasserstoffen, **dadurch gekennzeichnet, dass** zuerst eine Oxidation des Stickoxids NO zu NO₂ in einem ersten Katalysatorblock zur Oxidation ohne Zusatz von nachträglich eingespritzten Kohlenwasserstoffen ausgeführt wird und dass anschließend eine Reduktion der Stickoxide mit oder ohne Einfangen von NO₂ in einem zweiten Katalysatorblock zur Reduktion in Gegenwart von nachträglich eingespritzten Kohlenwasserstoffen ausgeführt wird.

9. Verfahren nach Anspruch 8, **dadurch gekennzeichnet, dass** die nachträgliche Einspritzung von Kohlenwasserstoffen direkt in einen Zylinder erfolgt.

10. Verfahren nach Anspruch 9, **dadurch gekennzeichnet, dass** der Schritt der Beförderung der nachträglich eingespritzten Kohlenwasserstoffe nur die Beförderung der nachträglich eingespritzten Kohlenwasserstoffe und der Auspuffgase des genannten Zylinders umfasst.
